# EUROPEAN PATENT APPLICATION

(11) **EP 4 753 240 A1**
(43) Date of publication of application: **03.06.2026**
(21) Application number: 24864214.2
(22) Date of filing: 02.07.2024
(51) Int. Cl.: H04L 67/51

(54) **MANAGEMENT METHOD AND APPARATUS BASED ON DIGITAL TWIN SERVICE**

(30) Priority: 15.09.2023 CN 202311193021; 10.05.2024 CN 202410573876
(71) Applicant: HUAWEI TECHNOLOGIES CO., LTD., Shenzhen, Guangdong 518129 (CN)
(72) Inventor: LI, Shitao, Shenzhen, Guangdong 518129 (CN); ZHU, Lei, Shenzhen, Guangdong 518129 (CN); TIAN, Zhuoyuan, Shenzhen, Guangdong 518129 (CN)
(74) Representative: Goddar, Heinz J.
(86) International application number: PCT/CN2024/103009
(87) International publication number: WO 2025/055489

(57) **Abstract**

A management method and apparatus based on a digital twin service are provided. The method includes: A first device creates at least one digital twin instance based on first information and data of a physical entity, where the first information indicates to create a digital twin requested by a second device, the at least one digital twin instance corresponds to the physical entity, and the first device is configured to manage the physical entity; and the first device sends second information to the second device, where the second information includes information about the at least one digital twin instance, and the second information indicates an operation that can be performed on the digital twin instance. According to the solutions of this application, a more accurate digital twin can be constructed. A vendor domain management system constructs a digital twin, and provides a digital twin service for an operator OSS domain.

## Description

This application claims priorities to Chinese Patent Application No. 202311193021.5, filed with the China National Intellectual Property Administration on September 15, 2023 and entitled "MANAGEMENT METHOD AND APPARATUS BASED ON DIGITAL TWIN SERVICE", and to Chinese Patent Application No. 202410573876.9, filed with the China National Intellectual Property Administration on May 10, 2024 and entitled "MANAGEMENT METHOD AND APPARATUS BASED ON DIGITAL TWIN SERVICE", both of which are incorporated herein by reference in their entireties.

### TECHNICAL FIELD

This application relates to the communication field, and more specifically, to a management method and apparatus based on a digital twin service.

### BACKGROUND

A digital twin (digital twin) is a digital concept and technical means. The digital twin takes integration and convergence of data and models as a basis and core, constructs accurate digital mapping of physical objects in digital space in real time, and emulates, verifies, predicts, and controls a full lifecycle process of a physical entity based on data integration, analytics, and prediction, to finally form an optimized closed-loop for intelligent decision-making. The digital twin is oriented to physical objects including real objects, behavior, and processes. Data related to constructing digital twins includes real-time running data, historical running data, and the like of the physical objects.

With development of digital twin technologies and application of the digital twin technologies in a plurality of industries such as production and manufacturing, application of the digital twin technology concept in the field of communication networks is also researched and concerned gradually in the industry. To address challenges in operation and maintenance management of communication networks, such as insufficient network flexibility, long research, development, and deployment cycles of new network technologies, complex network operation and maintenance management, and high costs and risks of network optimization, a concept of digital twin networks based on the digital twin technologies emerges. The digital twin network (digital twin network, DTN) is a network system that digitally creates virtual digital twins of physical network entities and can perform real-time interactive mapping with the physical network entities. Core elements of the digital twin network are data, model, interaction, and mapping. Application of the digital twin technologies in networks helps implement full lifecycle management from devices to networks, review the past, predict the future, and implement refined management throughout an entire procedure of the networks and devices, and helps the networks implement real-time closed-loop control, to implement closed-loop control and iterative optimization of the networks by using emulation, analytics, and prediction functions of digital twins.

How to construct digital twins more accurately and provide digital twin services for service operators is an urgent problem to be resolved.

### SUMMARY

This application provides a management method and apparatus based on a digital twin service. A digital twin service and an emulation service are constructed in a vendor device management domain system, so that data can be obtained more accurately and the services can be provided. This helps an operator for consumers manage networks and obtain digital twin service experience.

According to a first aspect, a management method based on a digital twin service is provided. The method includes: A first device creates at least one digital twin instance based on first information and data of a physical entity, where the first information indicates to create a digital twin requested by a second device, the at least one digital twin instance corresponds to the physical entity, and the first device is configured to manage the physical entity; and the first device sends second information to the second device, where the second information includes information about the at least one digital twin instance, and the second information indicates an operation that can be performed on the digital twin instance.

The first device may be a manufacturer device of a digital twin service provider, and the second device may be an operator device of a digital twin service requester. The first device can obtain all parameters of the physical entity, can obtain an internal implementation of the physical entity, and can directly manage the physical entity.

In this application, when the physical entity is a network entity object, that the first device manages the physical entity may be that the first device obtains information about a network object and manages and analyzes the information about the network object. For example, the first device may be a management data analytics function MDAF. The MDAF can process and analyze data related to networks and services, and provide useful analytics outputs. For example, the MDAF can predict faults; analyze network energy consumption and provide a recommended energy saving solution; and analyze network delay problems, provide root causes of excessively long delays in the network, and provide recommended solutions for resolving the long delays.

According to the solutions of this application, a vendor domain management system constructs a digital twin, and provides a digital twin service for an operator OSS domain, so that the digital twin is constructed more accurately. In addition, an operator OSS obtains experience of the digital twin service by using the service provided by a vendor domain, thereby achieving an envisioned goal of an operator in constructing the digital twin.

With reference to the first aspect, in some implementations of the first aspect, when the first information indicates that a visualization capability is needed, the method includes: creating at least one emulation entity instance based on the first information and the at least one digital twin instance, where the at least one emulation entity instance is for generating a real-time data stream for the corresponding at least one digital twin instance, where the second information further includes access information of the at least one emulation entity instance, and the access information is used by the second device to request the real-time data stream from the at least one emulation entity instance.

According to the solutions of this application, an emulation object entity is created, to provide a visualization function.

With reference to the first aspect, in some implementations of the first aspect, the at least one digital twin instance includes a first instance and a second instance, the first instance corresponds to a first physical entity, the first physical entity is configured to run a service of a primary network, the second instance corresponds to a second physical entity, and the second physical entity is configured to run a service of a secondary network. The method further includes: receiving third information from the second device, where the third information indicates a requirement of a first operation of the second device; and performing the first operation on the at least one digital twin instance based on the third information, where the first operation includes updating information about the first instance and the second instance.

With reference to the first aspect, in some implementations of the first aspect, the first operation further includes performing an operation on the first physical entity and the second physical entity based on updated information about the first instance and the second instance, for switching from the primary network to the secondary network.

With reference to the first aspect, in some implementations of the first aspect, first response information is sent, where the first response information indicates that the first operation succeeds.

With reference to the first aspect, in some implementations of the first aspect, the real-time data stream generated by the at least one emulation entity instance is updated.

With reference to the first aspect, in some implementations of the first aspect, a first operation report is sent, where the first operation report is determined based on running data of the at least one digital twin instance when the first operation is performed and the third information.

With reference to the first aspect, in some implementations of the first aspect, the first operation report further includes recommended operation information. The method further includes: performing a second operation on the at least one digital twin instance based on fourth information, where the fourth information is determined based on the recommended operation information, and the second operation includes updating the information about the first instance and the second instance again.

With reference to the first aspect, in some implementations of the first aspect, the first information or the third information includes at least one of the following information: target information, scope information, information requirement, capability information, supported operation information, operation information, digital twin instance information, and emulation entity instance information. The target information indicates the physical entity corresponding to the digital twin instance, the scope information indicates a service scope of the digital twin instance, the information requirement indicates data that is of the physical entity and that is needed by the digital twin instance, the capability information indicates a capability of the digital twin instance, the supported operation information indicates a capability of the digital twin instance, and the operation information indicates an operation requirement of the second device.

With reference to the first aspect, in some implementations of the first aspect, the data of the physical entity includes at least one of the following information: performance management information of the physical entity, fault management information of the physical entity, signaling information, network function NF network element instance information, and network instance information.

With reference to the first aspect, in some implementations of the first aspect, the first device receives, through a first interface, the first information and the third information that are from the second device.

With reference to the first aspect, in some implementations of the first aspect, the first device sends, through a second interface, the real-time data stream generated by the at least one emulation entity instance.

With reference to the first aspect, in some implementations of the first aspect, the first device receives, through an intent interface, the first information and the third information that are from the second device, and the first information and the third information are intent information created by the second device.

According to the solutions of this application, an intent-based management interface between the first device and the second device is provided, to facilitate operations for a consumer.

According to a second aspect, a management method based on a digital twin service is provided. The method includes: A second device sends first information, where the first information indicates to create a digital twin requested by the second device, the first information is used by a first device to create at least one digital twin instance based on data of a physical entity, the at least one digital twin instance corresponds to the physical entity, and the first device is configured to manage the physical entity; and the second device receives second information from the first device, where the second information includes information about the at least one digital twin instance, and the second information indicates an operation that can be performed on the digital twin instance.

With reference to the second aspect, in some implementations of the second aspect, when the first information indicates that a visualization capability is needed, the first information further indicates to create at least one emulation entity instance, where the at least one emulation entity instance is for generating a real-time data stream for the corresponding at least one digital twin instance, where the second information further includes access information of the at least one emulation entity instance, and the real-time data stream is requested from the at least one emulation entity instance based on the access information.

With reference to the second aspect, in some implementations of the second aspect, the at least one digital twin instance includes a first instance and a second instance, the first instance corresponds to a first physical entity, the first physical entity is configured to run a service of a primary network, the second instance corresponds to a second physical entity, and the second physical entity is configured to run a service of a secondary network. The method further includes: sending third information, where the third information indicates to perform a first operation on the at least one digital twin instance, the third information indicates a requirement of the first operation of the second device, and the first operation includes updating information about the first instance and the second instance.

With reference to the second aspect, in some implementations of the second aspect, the first operation further includes performing an operation on the first physical entity and the second physical entity based on updated information about the first instance and the second instance, for switching from the primary network to the secondary network.

With reference to the second aspect, in some implementations of the second aspect, first response information is received, where the first response information indicates that the first operation succeeds.

With reference to the second aspect, in some implementations of the second aspect, an updated real-time data stream generated by the at least one emulation entity instance is received.

With reference to the second aspect, in some implementations of the second aspect, a first operation report is received, where the first operation report is determined based on running data of the at least one digital twin instance when the first operation is performed and the third information.

With reference to the second aspect, in some implementations of the second aspect, the first operation report further includes recommended operation information. The method further includes: sending fourth information, where the fourth information indicates to perform a second operation on the at least one digital twin instance, the fourth information is determined based on the recommended operation information, and the second operation includes updating the information about the first instance and the second instance again.

With reference to the second aspect, in some implementations of the second aspect, the first information or the third information includes at least one of the following information: target information, scope information, information requirement, capability information, supported operation information, operation information, digital twin instance information, and emulation entity instance information. The target information indicates the physical entity corresponding to the digital twin instance, the scope information indicates a service scope of the digital twin instance, the information requirement indicates data that is of the physical entity and that is needed by the digital twin instance, the capability information indicates a capability of the digital twin instance, the supported operation information indicates a capability of the digital twin instance, and the operation information indicates an operation requirement of the second device.

With reference to the second aspect, in some implementations of the second aspect, the data of the physical entity includes at least one of the following information: performance management information of the physical entity, fault management information of the physical entity, signaling information, network function NF network element instance information, and network instance information.

With reference to the second aspect, in some implementations of the second aspect, the second device sends the first information and the third information through a first interface.

With reference to the second aspect, in some implementations of the second aspect, the second device receives, through a second interface, the real-time data stream generated by the at least one emulation entity instance.

With reference to the second aspect, in some implementations of the second aspect, the second device sends the first information and the third information through an intent interface, and the first information and the third information are intent information created by the second device.

According to a third aspect, a management apparatus based on a digital twin service is provided. The apparatus includes: a processing unit, configured to create at least one digital twin instance based on first information and data of a physical entity, where the first information indicates to create a digital twin requested by a second device, the at least one digital twin instance corresponds to the physical entity, and a first device is configured to manage the physical entity; and
an interface unit, configured to send second information to the first device, where the second information includes information about the at least one digital twin instance, and the second information indicates an operation that can be performed on the digital twin instance.

With reference to the third aspect, in some implementations of the third aspect, the processing unit is further configured to: when the first information indicates that a visualization capability is needed, create at least one emulation entity instance based on the first information and the at least one digital twin instance, where the at least one emulation entity instance is for generating a real-time data stream for the corresponding at least one digital twin instance, where the second information further includes access information of the at least one emulation entity instance, and the access information is used by the second device to request the real-time data stream from the at least one emulation entity instance.

With reference to the third aspect, in some implementations of the third aspect, the at least one digital twin instance includes a first instance and a second instance, the first instance corresponds to a first physical entity, the first physical entity is configured to run a service of a primary network, the second instance corresponds to a second physical entity, and the second physical entity is configured to run a service of a secondary network. The interface unit is further configured to receive third information from the second device, where the third information indicates a requirement of a first operation of the second device. The processing unit is further configured to perform the first operation on the at least one digital twin instance based on the third information, where the first operation includes updating information about the first instance and the second instance.

With reference to the third aspect, in some implementations of the third aspect, the first operation further includes performing an operation on the first physical entity and the second physical entity based on updated information about the first instance and the second instance, for switching from the primary network to the secondary network.

With reference to the third aspect, in some implementations of the third aspect, the interface unit is further configured to send first response information, where the first response information indicates that the first operation succeeds.

With reference to the third aspect, in some implementations of the third aspect, the processing unit is further configured to update the real-time data stream generated by the at least one emulation entity instance.

With reference to the third aspect, in some implementations of the third aspect, the interface unit is further configured to send a first operation report, where the first operation report is determined based on running data of the at least one digital twin instance when the first operation is performed and the third information.

With reference to the third aspect, in some implementations of the third aspect, the first operation report further includes recommended operation information. The processing unit is further configured to perform a second operation on the at least one digital twin instance based on fourth information, where the fourth information is determined based on the recommended operation information, and the second operation includes updating the information about the first instance and the second instance again.

With reference to the third aspect, in some implementations of the third aspect, the first information or the third information includes at least one of the following information: target information, scope information, information requirement, capability information, supported operation information, operation information, digital twin instance information, and emulation entity instance information. The target information indicates the physical entity corresponding to the digital twin instance, the scope information indicates a service scope of the digital twin instance, the information requirement indicates data that is of the physical entity and that is needed by the digital twin instance, the capability information indicates a capability of the digital twin instance, the supported operation information indicates a capability of the digital twin instance, and the operation information indicates an operation requirement of the second device.

With reference to the third aspect, in some implementations of the third aspect, the data of the physical entity includes at least one of the following information: performance management information of the physical entity, fault management information of the physical entity, signaling information, network function NF network element instance information, and network instance information.

With reference to the third aspect, in some implementations of the third aspect, the interface unit is specifically configured to receive, through a first interface, the first information and the third information that are from the second device.

With reference to the third aspect, in some implementations of the third aspect, the interface unit is specifically configured to send, through a second interface, the real-time data stream generated by the at least one emulation entity instance.

With reference to the third aspect, in some implementations of the third aspect, the interface unit is specifically configured to receive, through an intent interface, the first information and the third information that are from the second device, and the first information and the third information are intent information created by the second device.

According to a fourth aspect, a management apparatus based on a digital twin service is provided. The apparatus includes: an interface unit, configured to send first information, where the first information indicates to create a digital twin requested by a second device, the first information is used by a first device to create at least one digital twin instance based on data of a physical entity, the at least one digital twin instance corresponds to the physical entity, and the first device is configured to manage the physical entity. The interface unit is further configured to receive second information from the first device, where the second information includes information about the at least one digital twin instance, and the second information indicates an operation that can be performed on the digital twin instance.

With reference to the fourth aspect, in some implementations of the fourth aspect, when the first information indicates that a visualization capability is needed, the first information further indicates to create at least one emulation entity instance, where the at least one emulation entity instance is for generating a real-time data stream for the corresponding at least one digital twin instance, where the second information further includes access information of the at least one emulation entity instance. A processing unit is configured to request the real-time data stream from the at least one emulation entity instance based on the access information.

With reference to the fourth aspect, in some implementations of the fourth aspect, the at least one digital twin instance includes a first instance and a second instance, the first instance corresponds to a first physical entity, the first physical entity is configured to run a service of a primary network, the second instance corresponds to a second physical entity, and the second physical entity is configured to run a service of a secondary network. The interface unit is further configured to send third information, where the third information indicates to perform a first operation on the at least one digital twin instance, the third information indicates a requirement of the first operation of the second device, and the first operation includes updating information about the first instance and the second instance.

With reference to the fourth aspect, in some implementations of the fourth aspect, the first operation further includes performing an operation on the first physical entity and the second physical entity based on updated information about the first instance and the second instance, for switching from the primary network to the secondary network.

With reference to the fourth aspect, in some implementations of the fourth aspect, the interface unit is further configured to receive first response information, where the first response information indicates that the first operation succeeds.

With reference to the fourth aspect, in some implementations of the fourth aspect, the interface unit is further configured to receive an updated real-time data stream generated by the at least one emulation entity instance.

With reference to the fourth aspect, in some implementations of the fourth aspect, the interface unit is further configured to receive a first operation report, where the first operation report is determined based on running data of the at least one digital twin instance when the first operation is performed and the third information.

With reference to the fourth aspect, in some implementations of the fourth aspect, the first operation report further includes recommended operation information. The interface unit is further configured to send fourth information, where the fourth information indicates to perform a second operation on the at least one digital twin instance, the fourth information is determined based on the recommended operation information, and the second operation includes updating the information about the first instance and the second instance again.

With reference to the fourth aspect, in some implementations of the fourth aspect, the first information or the third information includes at least one of the following information: target information, scope information, information requirement, capability information, supported operation information, operation information, digital twin instance information, and emulation entity instance information. The target information indicates the physical entity corresponding to the digital twin instance, the scope information indicates a service scope of the digital twin instance, the information requirement indicates data that is of the physical entity and that is needed by the digital twin instance, the capability information indicates a capability of the digital twin instance, the supported operation information indicates a capability of the digital twin instance, and the operation information indicates an operation requirement of the second device.

With reference to the fourth aspect, in some implementations of the fourth aspect, the data of the physical entity includes at least one of the following information: performance management information of the physical entity, fault management information of the physical entity, signaling information, network function NF network element instance information, and network instance information.

With reference to the fourth aspect, in some implementations of the fourth aspect, the interface unit is specifically configured to send the first information and the third information through a first interface.

With reference to the fourth aspect, in some implementations of the fourth aspect, the interface unit is specifically configured to receive, through a second interface, the real-time data stream generated by the at least one emulation entity instance.

With reference to the fourth aspect, in some implementations of the fourth aspect, the interface unit is specifically configured to send the first information and the third information through an intent interface, and the first information and the third information are intent information created by the second device.

According to a fifth aspect, a management method based on a digital twin service is provided. The method includes: A management data analytics function MDAF creates at least one digital twin object based on fifth information and information about a network object, where the fifth information indicates to create the digital twin object, the MDAF is used to obtain the information about the network object and manage and analyze the information about the network object, and the at least one digital twin object corresponds to the network object; and the MDAF sends sixth information to a second device, where the sixth information includes a parameter of the at least one digital twin object, and the sixth information indicates an operation that can be performed on the digital twin object.

With reference to the fifth aspect, in some implementations of the fifth aspect, the fifth information includes at least one of the following information: requirement information, output information, capability information parameter, scope information, and time information. The requirement information indicates the MDAF to output an analytics result and/or a recommended solution, the output information indicates a manner in which the MDAF outputs the analytics result and/or the recommended solution, the capability information parameter indicates a capability of the digital twin object, the scope information indicates a network object to be analyzed, and the time information indicates a time range for analytics.

With reference to the fifth aspect, in some implementations of the fifth aspect, the parameter of the digital twin object indicates whether the object is a digital twin object, and the parameter of the digital twin object further indicates digital twin capability information of the object and a physical network object corresponding to the object.

With reference to the fifth aspect, in some implementations of the fifth aspect, when the fifth information indicates that a visualization capability is needed, the method includes: The MDAF sends seventh information to the second device, where the seventh information is used to request to establish a real-time data stream, the real-time data stream is used for transmission of a digital twin image generated based on the at least one digital twin object, and the digital twin image includes the information about the network object.

With reference to the fifth aspect, in some implementations of the fifth aspect, the method further includes: The MDAF sends a report to the second device, where the report includes the analytics result and/or the recommended solution, the analytics result is determined based on data information of the network object and the fifth information, the recommended solution includes a third operation, recommended by the MDAF, on the network object, and the third operation includes modifying a parameter of the network object corresponding to the digital twin object.

With reference to the fifth aspect, in some implementations of the fifth aspect, the method includes: updating the real-time data stream.

With reference to the fifth aspect, in some implementations of the fifth aspect, the information about the network object includes at least one of the following information: network performance measure, key performance indicator, technology quality of service indicator report, alarm, configuration data, network analytics data, and service experience data.

With reference to the fifth aspect, in some implementations of the fifth aspect, the MDAF receives the fifth information from the second device through a first interface.

With reference to the fifth aspect, in some implementations of the fifth aspect, the MDAF sends the real-time data stream through a second interface.

With reference to the fifth aspect, in some implementations of the fifth aspect, the MDAF receives, through an intent interface, the fifth information and eighth information that are from the second device, and the fifth information and the eighth information are intent information created by the second device.

According to a sixth aspect, a management method based on a digital twin service is provided. The method includes: A second device sends fifth information, where the fifth information indicates a management data analytics function MDAF to create a digital twin object based on a requirement of the second device, the MDAF is used to obtain information about a network object and manage and analyze the information about the network object, and the digital twin object corresponds to the network object; and the second device receives sixth information, where the sixth information includes a parameter of at least one digital twin object, and the sixth information indicates an operation that can be performed on the digital twin object.

With reference to the sixth aspect, in some implementations of the sixth aspect, the fifth information includes at least one of the following information: requirement information, output information, capability information parameter, scope information, and time information. The requirement information indicates the MDAF to output an analytics result and/or a recommended solution, the output information indicates a manner in which the MDAF outputs the analytics result and/or the recommended solution, the capability information parameter indicates a capability of the digital twin object, the scope information indicates a network object to be analyzed, and the time information indicates a time range for analytics.

With reference to the sixth aspect, in some implementations of the sixth aspect, the parameter of the digital twin object indicates whether the object is a digital twin object, and the parameter of the digital twin object indicates capability information of the object and the network object corresponding to the object.

With reference to the sixth aspect, in some implementations of the sixth aspect, when the fifth information indicates that a visualization capability is needed, the method includes: receiving seventh information, where the seventh information is used to request to establish a real-time data stream, the real-time data stream is used for transmission of a digital twin image generated based on the at least one digital twin object, and the digital twin image includes the information about the network object.

With reference to the sixth aspect, in some implementations of the sixth aspect, the method further includes: The second device receives a report sent by the MDAF, where the report includes the analytics result and/or the recommended solution, the analytics result is determined based on data information of the network object and the fifth information, the recommended solution includes a third operation, recommended by the MDAF, on the network object, and the third operation includes modifying a parameter of the network object corresponding to the digital twin object.

With reference to the sixth aspect, in some implementations of the sixth aspect, when the sixth information indicates that the digital twin object has a verification capability, the method further includes: The second device sends eighth information, where the eighth information includes identification ID information of the digital twin object, the eighth information is determined based on the recommended solution, the eighth information indicates a fourth operation on the digital twin object, and the fourth operation includes modifying the parameter of the digital twin object.

With reference to the sixth aspect, in some implementations of the sixth aspect, the method includes: updating the real-time data stream.

With reference to the sixth aspect, in some implementations of the sixth aspect, the information about the network object includes at least one of the following information: network performance measure, key performance indicator, technology quality of service indicator report, alarm, configuration data, network analytics data, and service experience data.

With reference to the sixth aspect, in some implementations of the sixth aspect, the second device sends the fifth information to the MDAF through a first interface, and the second device sends the eighth information to the digital twin object through the first interface.

With reference to the sixth aspect, in some implementations of the sixth aspect, the second device receives the real-time data stream through a second interface.

With reference to the sixth aspect, in some implementations of the sixth aspect, the second device sends the fifth information and the eighth information to the MDAF through an intent interface, and the fifth information and the eighth information are intent information created by the second device.

According to a seventh aspect, a management apparatus based on a digital twin service is provided. The apparatus includes: an interface unit, configured to receive fifth information; and a processing unit, configured to create at least one digital twin object based on the fifth information and information about a network object, where the fifth information indicates to create the digital twin object, and the at least one digital twin object corresponds to the network object. The interface unit is further configured to obtain the information about the network object. The processing unit is further configured to manage and analyze the information about the network object. The interface unit is further configured to send sixth information to a second device, where the sixth information includes a parameter of the at least one digital twin object, and the sixth information indicates an operation that can be performed on the digital twin object.

With reference to the seventh aspect, in some implementations of the seventh aspect, the fifth information includes at least one of the following information: requirement information, output information, capability information parameter, scope information, and time information. The requirement information indicates an MDAF to output an analytics result and/or a recommended solution, the output information indicates a manner in which the MDAF outputs the analytics result and/or the recommended solution, the capability information parameter indicates a capability of the digital twin object, the scope information indicates a network object to be analyzed, and the time information indicates a time range for analytics.

With reference to the seventh aspect, in some implementations of the seventh aspect, the parameter of the digital twin object indicates whether the object is a digital twin object, and the parameter of the digital twin object indicates capability information of the object and the network object corresponding to the object.

With reference to the seventh aspect, in some implementations of the seventh aspect, when the fifth information indicates that a visualization capability is needed, the interface unit is configured to send seventh information to the second device, where the seventh information is used to request to establish a real-time data stream, the real-time data stream is used for transmission of a digital twin image generated based on the at least one digital twin object, and the digital twin image includes the information about the network object.

With reference to the seventh aspect, in some implementations of the seventh aspect, the interface unit is further configured to send a report to the second device, where the report includes the analytics result and/or the recommended solution, the analytics result is determined based on data information of the network object and the fifth information, the recommended solution includes a third operation, recommended by the MDAF, on the network object, and the third operation includes modifying a parameter of the network object corresponding to the digital twin object.

With reference to the seventh aspect, in some implementations of the seventh aspect, the processing unit is further configured to update the real-time data stream.

With reference to the seventh aspect, in some implementations of the seventh aspect, the information about the network object includes at least one of the following information: network performance measure, key performance indicator, technology quality of service indicator report, alarm, configuration data, network analytics data, and service experience data.

With reference to the seventh aspect, in some implementations of the seventh aspect, the interface unit is specifically configured to send the real-time data stream through a second interface.

With reference to the seventh aspect, in some implementations of the seventh aspect, the interface unit is specifically configured to receive, through an intent interface, the fifth information and eighth information that are from the second device, and the fifth information and the eighth information are intent information created by the second device.

According to an eighth aspect, a management apparatus based on a digital twin service is provided. The apparatus includes: an interface unit, configured to send fifth information, where the fifth information indicates a management data analytics function MDAF to create a digital twin object requested by a second device, the MDAF is used to obtain information about a network object and manage and analyze the information about the network object, and the digital twin object corresponds to the network object. The interface unit is further configured to receive sixth information, where the sixth information includes a parameter of at least one digital twin object, and the sixth information indicates an operation that can be performed on the digital twin object.

With reference to the eighth aspect, in some implementations of the eighth aspect, the fifth information includes at least one of the following information: requirement information, output information, capability information parameter, scope information, and time information. The requirement information indicates the MDAF to output an analytics result and/or a recommended solution, the output information indicates a manner in which the MDAF outputs the analytics result and/or the recommended solution, the capability information parameter indicates a capability of the digital twin object, the scope information indicates a network object to be analyzed, and the time information indicates a time range for analytics.

With reference to the eighth aspect, in some implementations of the eighth aspect, the parameter of the digital twin object indicates whether the object is a digital twin object, and the parameter of the digital twin object indicates capability information of the object and the network object corresponding to the object.

With reference to the eighth aspect, in some implementations of the eighth aspect, when the fifth information indicates that a visualization capability is needed, the interface unit is configured to receive and send seventh information, where the seventh information is used to request to establish a real-time data stream, the real-time data stream is used for transmission of a digital twin image generated based on the at least one digital twin object, and the digital twin image includes the information about the network object.

With reference to the eighth aspect, in some implementations of the eighth aspect, the interface unit is configured to receive a report sent by the MDAF, where the report includes the analytics result and/or the recommended solution, the analytics result is determined based on data information of the network object and the fifth information, the recommended solution includes a third operation, recommended by the MDAF, on the network object, and the third operation includes modifying a parameter of the network object corresponding to the digital twin object.

With reference to the eighth aspect, in some implementations of the eighth aspect, when the seventh information indicates that the digital twin object has a verification capability, the interface unit is configured to send eighth information, where the eighth information includes identification ID information of the digital twin object, the eighth information is determined based on the recommended solution, the eighth information indicates a fourth operation on the digital twin object, and the fourth operation includes modifying the parameter of the digital twin object.

With reference to the eighth aspect, in some implementations of the eighth aspect, a processing unit is configured to update the real-time data stream.

With reference to the eighth aspect, in some implementations of the eighth aspect, the information about the network object includes at least one of the following information: network performance measure, key performance indicator, technology quality of service indicator report, alarm, configuration data, network analytics data, and service experience data.

With reference to the eighth aspect, in some implementations of the eighth aspect, the interface unit is specifically configured to send the fifth information to the MDAF through a first interface, or send the eighth information to the digital twin object through the first interface.

With reference to the eighth aspect, in some implementations of the eighth aspect, the interface unit is specifically configured to receive the real-time data stream through a second interface.

With reference to the eighth aspect, in some implementations of the eighth aspect, the interface unit is specifically configured to send the fifth information and the eighth information to the MDAF through an intent interface, and the fifth information and the eighth information are intent information created by the second device.

According to a ninth aspect, a management system based on a digital twin service is provided. The system includes the apparatus provided in the third aspect and the apparatus provided in the fourth aspect, or includes the apparatus provided in the seventh aspect and the apparatus provided in the eighth aspect. The management system may complete the management method based on the digital twin service provided in the first aspect, the second aspect, or any possible implementation of the first aspect or the second aspect, or complete the management method based on the digital twin service provided in the fifth aspect, the sixth aspect, or any possible implementation of the fifth aspect or the sixth aspect.

According to a tenth aspect, a computer-readable storage medium is provided. The computer-readable storage medium stores a computer program. When the computer program is run on a computer, the computer is caused to execute instructions of the method according to the first aspect, the second aspect, or any possible implementation of the first aspect or the second aspect, or execute instructions of the method according to the fifth aspect, the sixth aspect, or any possible implementation of the fifth aspect or the sixth aspect.

According to an eleventh aspect, a chip is provided. The chip includes a processor. The processor may execute instructions to perform the method according to the first aspect, the second aspect, or any possible implementation of the first aspect or the second aspect, or perform the method according to the fifth aspect, the sixth aspect, or any possible implementation of the fifth aspect or the sixth aspect.

The processor mentioned above may be a general-purpose central processing unit (CPU), a microprocessor, an application-specific integrated circuit (application-specific integrated circuit, ASIC), one or more integrated circuits configured to control program execution in the method according to the first aspect or the second aspect, or one or more integrated circuits configured to control program execution in the method according to the fifth aspect or the sixth aspect.

According to a twelfth aspect, a computer program product is provided. The product includes computer program code. When the computer program code is run, instructions of the method according to the first aspect, the second aspect, or any possible implementation of the first aspect or the second aspect are executed, or instructions of the method according to the fifth aspect, the sixth aspect, or any possible implementation of the fifth aspect or the sixth aspect are executed.

According to a thirteenth aspect, a chip system is provided. The chip system includes a memory and a processor. The memory is configured to store instructions. The processor is configured to invoke the instructions from the memory and run the instructions to perform the method according to the first aspect or the second aspect and the possible implementations of the first aspect or the second aspect, or perform the method according to the fifth aspect or the sixth aspect and the possible implementations of the fifth aspect or the sixth aspect.

The chip system may include an input circuit or interface configured to send information or data, and an output circuit or interface configured to receive information or data.

Specifically, for beneficial effects of other aspects, refer to the beneficial effects described in the first aspect.

### BRIEF DESCRIPTION OF DRAWINGS

FIG. 1 is a diagram of an architecture of a network management system and a vendor device management system according to an embodiment of this application;
FIG. 2 is a diagram of an architecture of a digital twin service according to an embodiment of this application;
FIG. 3 shows a management model of a digital twin service according to an embodiment of this application;
FIG. 4 is a schematic flowchart of a management method based on a digital twin service according to an embodiment of this application;
FIG. 5 is a schematic flowchart of another management method based on a digital twin service according to an embodiment of this application;
FIG. 6 is a schematic flowchart of still another management method based on a digital twin service according to an embodiment of this application;
FIG. 7 is a block diagram of a management apparatus based on a digital twin service according to an embodiment of this application; and
FIG. 8 is a block diagram of another management apparatus based on a digital twin service according to an embodiment of this application.

### DESCRIPTION OF EMBODIMENTS

It should be understood that, in this application, "sending information to... (a terminal)" may be understood as that a destination end of the information is the terminal, and may include directly or indirectly sending the information to the terminal. "Receiving information from... (a terminal)" may be understood as that a source end of the information is the terminal, and may include directly or indirectly receiving the information from the terminal. Information may undergo necessary processing, for example, a format change, between a source end and a destination end for sending of the information. However, the destination end may understand valid information from the source end. Similar expressions in this application may be understood similarly. Details are not described herein again.

For ease of understanding of embodiments of this application, concepts and technologies in embodiments of this application are first briefly described.

It should be understood that related terms and descriptions below are applicable to all embodiments in this specification. Different embodiments may be used independently, or may be used in combination based on some internal or external relationships. Different implementations in embodiments may be used independently or in combination.

### 1. Physical network layer

The physical network layer mainly includes all physical entities that form an end-to-end network. Various network elements in the network exchange network data and network control information with a network twin through a twin southbound interface. As an entity object of the network twin, a physical network may be a mobile access network, a mobile core network, or another type of network like a data center network, a campus enterprise network, or an industrial internet of things. The physical network may be a subnetwork in a single network domain (for example, an access network, a transmission network, a core network, or a transport network) or an end-to-end cross-domain network.

The physical entity is a physical object. For hardware, the physical entity is the hardware, for example, a board, an antenna, and a chip of a base station. For software, the physical entity is a carrier of the software, for example, an image file and software code in various forms.

### 2. Digital twin

The digital twin is a twin digital object (digital twin management model) of a physical object, for example, a digital twin that is of a network element and that is generated by performing twining on the network element, and a digital twin that is of a network and that is generated by performing twining on the network. In a digital twin network, a status of the digital twin is synchronized with a status of the physical entity. The digital twin management model includes attribute, status, time series data, behavior, and the like.

### 3. Emulation entity

The emulation entity refers to emulating, by using digital technologies, physical entities corresponding to digital twins, to achieve visualization.

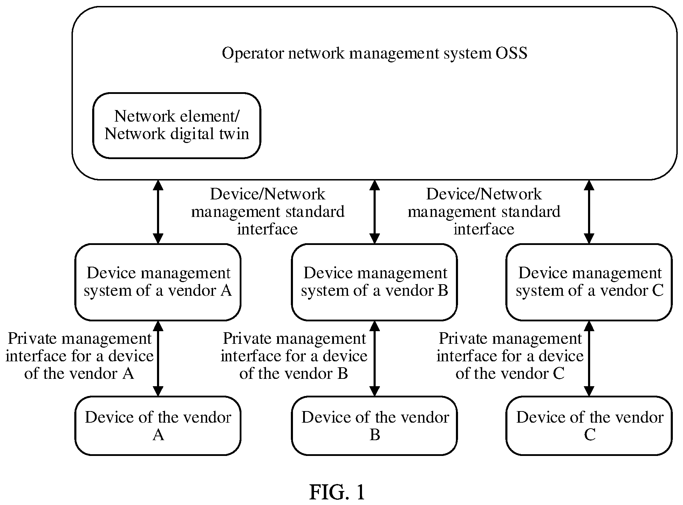

As shown in FIG. 1, currently, management of a communication network mainly relates to an upper-layer network management system (operation support system, OSS) of an operator and device management systems (vendor domain management systems) designed by device vendors for vendors. A standardized interface (for example, a management interface that is for a network element/network and that is defined in 3GPP SA5, involving a network element/network performance management (performance management, PM) interface, fault management (fault management, FM) interface, and configuration management (configuration management, CM) interface, and the like) is used for interaction between the operator network management system OSS and the vendor domain management system. Internal implementations of network element devices (for example, network element devices) of the vendors do not need to be standardized, and implementations of the vendors vary greatly. Therefore, currently, private implementation interfaces of the vendors are used between the vendor domain management systems and the devices. Configuration management is used as an example. Standard network element/network configurable parameters are defined between the OSS and the vendor domain management systems. These parameters are a basis for normal running of the network. All vendors support configuration of the standard parameters. However, due to different internal implementations of the devices, the private interfaces between the vendor domain management systems and the devices includes more private parameter configurations, which vary among the vendors.

In a possible implementation, in a possible digital twin implementation architecture proposed by an operator, a digital twin is constructed in an operator OSS domain, and information transferred on interfaces between more vendor domain management systems and the OSS is standardized, to construct the digital twin.

It should be understood that a key to digital twin construction is to construct accurate digital mapping of physical objects. Currently, the operator OSS domain obtains only a part of parameters, performance, and fault indicators of network element/network through the standard interfaces. Internal running information of the device is maintained and managed only on the vendor domain management system. This part of content is difficult to be standardized. Even if this part of content is standardized, it takes a long period. This is not conducive to promotion of digital twin technologies.

Another key technology for digital twin construction is to emulate devices (including network elements/networks). Currently, internal implementations of the devices are not within a standard scope. Even if the OSS obtains full parameter information (standardized parameters and private management parameters) of the devices, it is still difficult to emulate the devices because the internal implementations of the devices are unknown. Therefore, currently, the digital twin constructed in the OSS domain cannot truly reflect running of a physical network. Only viewing of a running status of the physical network based on standard data can be implemented, but high-level services (for example, redundancy switchover verification and network configuration result prediction that are based on the digital twin) cannot be implemented.

Based on the foregoing problems, this application provides a management method based on a digital twin service.

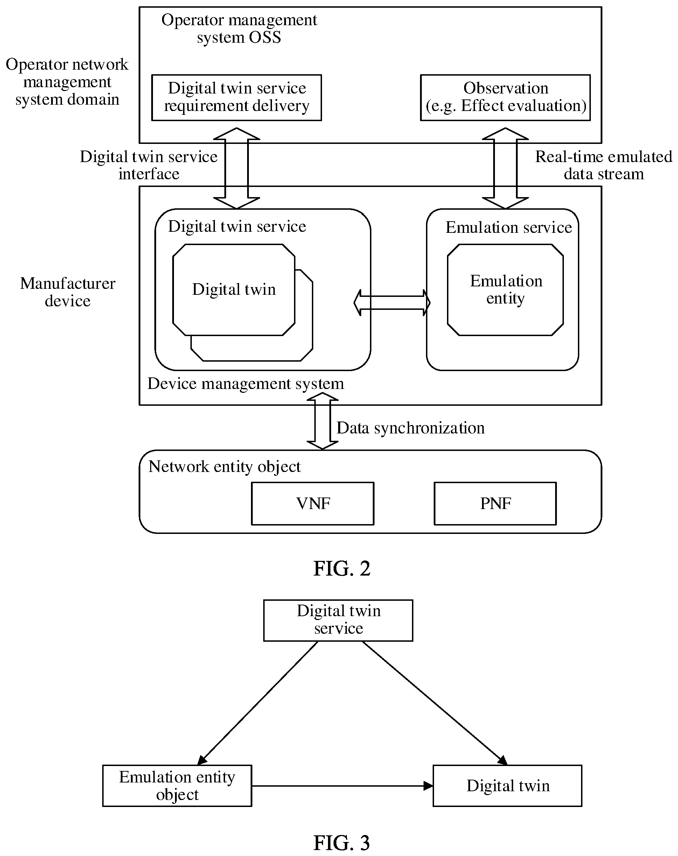

As shown in FIG. 2, two new services: digital twin service and emulation service, are added to a vendor domain management system. The digital twin service is used to obtain data of a physical entity and operate the physical entity. The digital twin service includes a digital twin service provider and a digital twin management service. The emulation service corresponds to the digital twin service and is used to display the data of the physical entity in real time.

As shown in FIG. 3, a management model of the digital twin service includes a digital twin service object, a digital twin object, and an emulation entity object.

Table 1 lists parameters that may be included in the digital twin service object (DigitalTwin).

**Table 1 Parameters included in a digital twin service and parameter content**

| Parameter name | Parameter content |
|---|---|
| Target (target) | Target of a digital twin, where the target may be a specific network or network element instance, or a local network/network element |
| Scope (scope) | Scope of the digital twin service, for example, redundancy, energy saving, and configuration management |
| Requirement (requirements) | Information requirements on which the digital twin service performs twinning, for example, network element signaling information and alarm information |
| Capability (capability) | Capabilities that the digital twin service should have, for example, visualization, verification, and prediction |
| Supported operation (SupportedOperation) | Operations supported by the digital twin service, where the parameter is fed back by a service creator and cannot be modified by a requester |
| Operation (Operation) | Operations that the requester selects and indicates to be performed based on the supported operations fed back by the service creator |
| Digital twin instance information (DigitalTwinEntityRef) | Digital twin instance information associated with the digital twin service, where the parameter is fed back by the service creator and cannot be modified by the requester |
| Emulation entity instance information (emulationObjectRef) | Emulation entity instance information associated with the digital twin service, where the parameter is fed back by the service creator and cannot be modified by the requester |

The digital twin object (DigitalTwinEntity) represents that one or more digital twin instances may need to be created during creation of one digital twin service instance. Table 2 lists parameters that may be included in the digital twin object.

**Table 2 Parameters included in the digital twin and parameter content**

| Parameter name | Parameter content |
|---|---|
| Scope (scope) | Information twinned by the digital twin, for example, PM, FM, and signaling |
| NF information (NFRef) | NF instance information twinned by the digital twin |
| Network information (networkref) | Network instance information twinned by the digital twin |

For the emulation entity object (emulationObject), when the digital twin service has a visualization requirement, the digital twin service invokes the emulation service and requests to create a corresponding emulation entity object instance. The emulation entity object may include the following parameter: address (address), which is access address information of an emulation entity and may be in a form of a URI or an IP address.

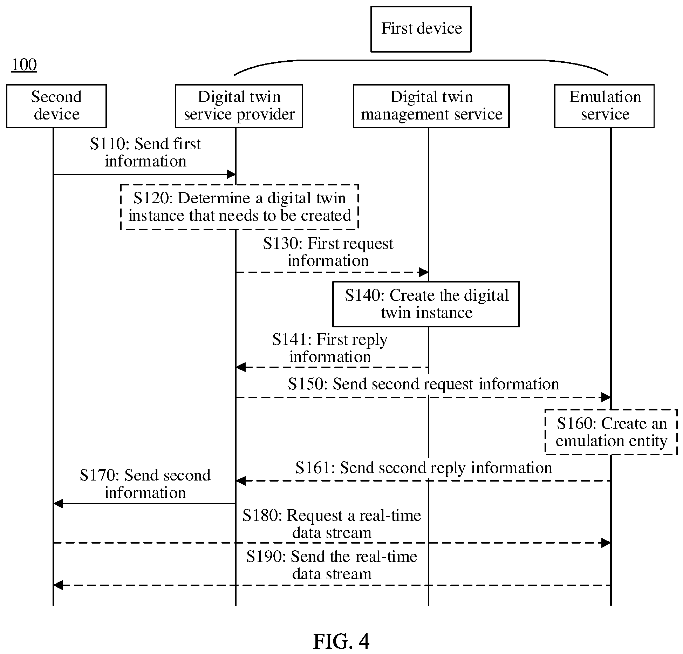

As shown in FIG. 4, a dashed line or a dashed-line box indicates that a step is a step that can be performed in some implementations, and a solid line or a solid-line box indicates that a step is a necessary step. A method 100 may include the following steps.

S110: A second device sends first information, and correspondingly, a first device receives the first information.

The second device is an operator device and belongs to a service consumer. A digital twin service provider may be an operator management system, or may be an upper-level system configured to manage another vendor domain management system. This is not limited in this application.

The first device is configured to manage a physical entity. The first device may be a manufacturer device that manages the physical entity. The first device includes a digital twin service and an emulation service. The digital twin service includes the digital twin service provider and a digital twin management service. The digital twin service provider, the digital twin management service, and the emulation service can be separately located on a plurality of devices or centralized in one device. All of the devices are devices in the vendor domain management system and are configured to directly manage physical entities, networks, networks, and the like. Because internal implementations of devices of vendors are different, private interfaces between the vendor domain management system and the devices include more private parameter configurations, in other words, the first device may obtain internal running information of the physical entity. In the following descriptions, the digital twin service provider, the digital twin management service, and the emulation service are separately described, and all may be understood as descriptions of the first device.

The second device sends the first information, where the first information indicates to create a digital twin requested by the second device. The first information is used to request to create at least one twin service DigitalTwin instance. The first information includes at least one of the following parameters: target, scope, information requirement, capability information, supported operation information, operation information, digital twin instance information, and emulation entity instance information. The target parameter indicates a physical entity corresponding to a digital twin instance, the scope parameter indicates a service scope of the digital twin instance, the information requirement parameter indicates data that is of the physical entity and that is needed by the digital twin instance, the capability information parameter indicates a capability of the digital twin instance, the supported operation information indicates a capability of the digital twin instance, and the operation information indicates an operation requirement of the second device.

For example, the first information may carry a DigitalTwin object, including:
target parameter (target): network identifier (target network information, namely, an identifier of the physical entity, or information about an area in which the physical entity is located, which may be used to select a proper physical entity network);
scope parameter (scope): redundancy switchover;
information requirement parameter (requirements): network element signaling and alarm information; and
capability information parameter (capabilities): visualization and verification (the created digital twin instance has visualization and verification capabilities).

In a possible implementation, the digital twin service provider receives the first information from the second device through a first interface. The first interface is a digital twin service interface, and is located between the first device and the second device.

In another possible implementation, the digital twin service provider receives, through an intent interface, the first information sent by the second device. The first information is intent information created by the second device.

S120: The digital twin service provider determines at least one digital twin instance that needs to be created.

The digital twin service provider determines at least one digital twin instance based on first request information. The digital twin instance is associated with corresponding data of the physical entity.

The digital twin service may include a plurality of created digital twins. Based on different requirements, there may be a plurality of digital twins even if the plurality of digital twins correspond to a same physical entity. For example, for a same network element, there may be a digital twin only for signaling transmission on the network element and a digital twin only for alarm information, or there may be a same digital twin that emulates both the signaling transmission on the network element and the alarm information. The digital twin may be a digital model twining for physical network elements/networks.

S130: The digital twin service provider sends the first request information, and correspondingly, the digital twin management service receives the first request information.

The first request information is used to request to create the determined at least one digital twin instance that needs to be created.

S140: The digital twin management service creates the at least one digital twin instance.

For example, a plurality of digital twin instances may be created based on the first request information.

A digital twin instance 1 (DigitalTwinEntity-1) is created. The digital twin instance 1 specifically includes the following parameters:
Scope: signaling (the digital twin instance mainly performs twinning and modeling on signaling in the network);
networkRef: network-1 (identifier of a primary network);
capability: verification (having a verification capability); and
configurable parameters: capacity (weight information), taiList (service location information), plmnInfo (operator slice information), and the like.

A digital twin object instance 2 (DigitalTwinEntity-2) is created. The digital twin instance 2 specifically includes the following parameters:
Scope: alarm information (the digital twin instance mainly performs twinning and modeling on alarm information in the network);
networkRef: network-1 (identifier of the primary network); and
capability: verification (having a verification capability).

A digital twin object instance 3 (DigitalTwinEntity-3) is created. The digital twin instance 3 specifically includes the following parameters:
Scope: signaling (the digital twin instance mainly performs twinning and modeling on signaling in the network);
networkRef: network-2 (identifier of a secondary network);
capability: verification (having a verification capability); and
configurable parameters: capacity (weight information), taiList (service location information), plmnInfo (operator slice information), and the like.

A digital twin object instance 4 (DigitalTwinEntity-4) is created. The digital twin instance 4 specifically includes the following parameters:
Scope: alarm information (the digital twin instance mainly performs twinning and modeling on alarm information in the network);
networkRef: network-2 (identifier of the secondary network); and
capability: verification (having a verification capability).

S141: The digital twin management service sends first reply information, and correspondingly, the digital twin service provider receives the first reply information.

The first reply information includes information about the digital twin instance.

S150: The digital twin service provider sends second request information, and correspondingly, the emulation service receives the second request information.

The emulation service is configured to emulate a generated digital twin (there may be one or more generated digital twins) and generate an emulation entity. The emulation entity is mainly used for observation. A data change can be observed in real time on the emulation entity through data synchronization between a network entity object and the digital twin. The emulation service may send the created emulation entity to the operator management system in a manner of real-time data stream, to meet an observation requirement of an operator.

The digital twin service corresponds to the emulation service. The emulation service is configured to display the data of the physical entity in real time. When the first information indicates that the capability information parameter of the digital twin instance includes the visualization (capabilities) capability, the digital twin service provider sends the second request information. The second request information includes information about a successfully created digital twin instance. The second request information indicates the emulation service to create at least one emulation entity instance, and the emulation entity instance corresponds to the digital twin instance.

S160: The emulation service creates the emulation entity.

S161: The emulation service sends second reply information, and correspondingly, the digital twin service provider receives the second reply information.

The emulation service creates, based on information about at least one digital twin object instance in the received second request information, an emulation entity instance of the digital twin, and replies with a success response (namely, the second reply information) when the emulation entity is successfully created. The response includes access information (for example, a URL or IP address information used for connection) of the emulation entity.

S170: The digital twin service provider sends second information, and correspondingly, the second device receives the second information.

The second information indicates an operation that can be performed on the digital twin instance.

The second information includes the information about the at least one digital twin instance and the access information of the at least one emulation entity instance.

The second information is used to reply with a digital twin service object instance creation success response, including information about the digital twin service object instance. The access information is used to request a real-time data stream from the at least one emulation entity instance.

For example, an operation supported by a digital twin service instance (SupportedOperation), the access information of the emulation entity, and the like may be included. The supported operation may be switchover verification, switchover execution, or switchover verification and execution.

S180: The second device requests the real-time data stream.

S190: The emulation service sends the real-time data stream, and correspondingly, the second device receives the real-time data stream.

The second device requests an emulation entity real-time animation by using the received access information of the emulation entity. The emulation service sends the real-time data stream to the second device through a second interface, and the emulation service returns the emulation entity real-time animation to the service consumer.

For example, the emulation service may establish a data stream transmission channel, namely, the second interface, between the emulation entity and the consumer based on a real-time data stream transmission manner.

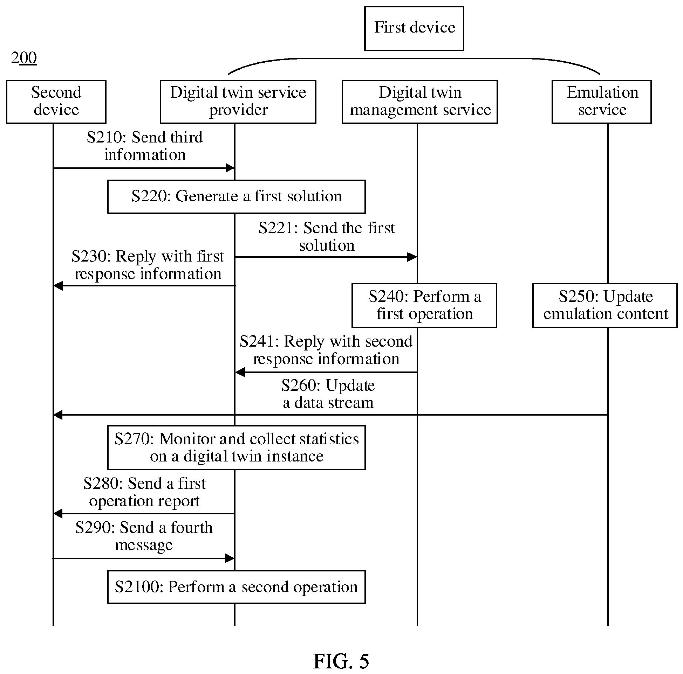

As shown in FIG. 5, this application provides a management method 200 based on a digital twin service.

The method includes at least the following steps.

S210: A second device sends third information, and correspondingly, a digital twin service provider receives the third information.

At least one digital twin instance created by a digital twin service includes a first instance and a second instance. The first instance corresponds to a first physical entity, the first physical entity is configured to run a service of a primary network, the second instance corresponds to a second physical entity, and the second physical entity is configured to run a service of a secondary network.

The third information indicates to perform a first operation on the digital twin instance, the third information indicates a requirement of the first operation of the second device, and the first operation includes updating parameters of the first instance and the second instance.

An operation execution request is sent to the digital twin service provider based on supported operation (SupportedOperation) information included in information about a digital twin service instance. For example, in step S170 in the method 100, the digital twin service instance received by the service consumer may include a supported operation parameter, including:
Name: operation name.

The third information indicates to update the digital twin service instance and set an Operation parameter.

For example, the parameter may include the following information:
Name: switchover verification (operation name, from SupportedOperation); and
Operation target: operation target (a target of performing an operation, for example, in this example, the target may be that a user completes switching from the primary network to the secondary network and re-registration within 20 minutes during switchover).

In a possible implementation, the digital twin service provider receives the third information from the second device through a first interface. The first interface is a digital twin service interface, and is located between a first device and the second device.

In another possible implementation, the digital twin service provider receives, through an intent interface, the third information sent by the second device. The third information is intent information created by the second device.

For example, the intent information may be:
"Intent:
userLabel: 1 # any value
intentExpectation:
   expectationId: 1 # any value
   expectationObject:
      objectInstance: DigitalTwin-1 # identifier of the digital twin service object instance
      expectationTargets:
         - targetName: "Operation"
      targetCondition: "is equal to"
      targetValueRange: "switchover verification" # value from SupportedOperation
         - targetName: "ReRegistrationTime"
      targetCondition: "IS_LESS_THAN"
         targetValueRange: "20" # unit: minute"

objectInstance indicates information about an object to which the intent is targeted. In the foregoing implementation, a value of objectInstance is the identifier of the created digital twin service instance. The identifier may be from creation in the method 100, and is generally provided by the second device, namely, the service consumer, in the first step.

ExpectationTargets indicates a target of the intent. In the foregoing example, there are two targets. One operation (operation) target is performing switchover verification. The other operation target is that ReRegistrationTime (re-registration duration) is less than 20 minutes.

S220: The digital twin service provider generates a first solution.

S221: The digital twin service provider sends the first solution, and correspondingly, a digital twin management service receives the first solution.

The digital twin service provider determines the first solution based on the third information.

S230: The digital twin service provider sends first response information to the second device.

The digital twin service provider replies with a response, indicating that the first operation is accepted, and the digital twin service provider waits for updated emulation content.

S240: The digital twin management service performs the first operation.

After receiving the first solution, the digital twin management service performs the first operation on the digital twin instance based on the first solution. The first operation includes updating the parameters of the first instance and the second instance.

For example, the digital twin service provider generates a switchover solution based on a received request, and sends a group of new configuration parameters to the at least one digital twin instance. For example, a value of capacity in configurable parameters in DigitalTwinEntity-1 is set to 0, and a value of capacity in configurable parameters in DigitalTwinEntity-3 is set to 100. This indicates that a weight of a digital twin of the primary network is 0 and the primary network is in a non-invokable state. A weight of a digital twin of the secondary network is 100 and the secondary network is in an available state. In this way, switchover between the primary network and the secondary network is implemented.

The first operation may further include performing an operation on the first physical entity and the second physical entity based on updated parameters of the first instance and the second instance, for switching from the primary network to the secondary network.

It should be understood that the name of the supported operation may be switchover verification, switchover execution, or switchover verification and execution. Switchover verification is performed only on the digital twin service instance and does not affect a real physical network. Switchover execution means directly performing a switchover operation on the digital twin service instance and synchronously performing the same operation on the physical network. Switchover verification and execution means first performing switchover verification on the digital twin service instance, and performing the same operation on the physical network when it is verified that the switchover solution meets requirements.

S241: The digital twin management service replies with a second response information.

The digital twin management service sends the second response information. The second response information indicates that the first operation succeeds.

S250: An emulation service updates emulation content.

When the parameters of the digital twin instance are updated, the emulation service updates a real-time data stream generated by an emulation entity instance. Because information about the emulation entity instance and information about the digital twin instance are collected synchronously, content of the emulation entity is also updated in real time.

S260: The emulation service sends an updated real-time data stream.

The updated emulated real-time data stream is sent based on the real-time data stream transmission channel created in S180 and S190 in the method 100.

S270: The digital twin service provider monitors and collects statistics on the digital twin instance.

S280: The digital twin service provider sends a first operation report, and correspondingly, the second device receives the first operation report.

The digital twin service provider monitors and collects statistics on running data of the digital twin instance, for example, signaling statistics information of DigitalTwinEntity-1 and alarm information of DigitalTwinEntity-2, and compares the collected statistics information with an indicator included in Operation target in the third information.

The first operation report is determined based on the running data of the digital twin instance and the third information.

The first operation report further includes recommended operation information.

For example, the first operation report may be a switchover verification report, mainly including information about whether Operation target is fulfilled. If Operation target is not fulfilled, a recommended Operation target or other recommended information may be included, for example, switchover starts at 00:00.

For example, if name information carried in the Operation parameter in the third information is "switchover verification and execution", and the first operation report meets the target set in the third information, a same operation is initiated to the physical network based on the switchover solution generated in step S220, to be specific, the corresponding physical network initiates delivery of new configuration information.

In another possible implementation, the first operation report may be included in an intent report (IntentReport), to indicate whether the targets (targets) included in expectation Targets are fulfilled. The intent report may also include recommended information when the targets are not fulfilled.

S290: The second device sends fourth information, and correspondingly, the digital twin service provider receives the fourth information.

S2100: The digital twin service provider generates a second solution.

The second solution is sent to the digital twin management service, and the second solution is determined based on the fourth information.

When the first operation report indicates that the running data of the digital twin instance does not meet parameters included in first operation information, the first operation report further includes the recommended operation information. The second device may determine the fourth information based on the recommended operation information, and send the fourth information. The first device performs a second operation on the at least one digital twin instance based on the fourth information.

For example, if the first operation report indicates that a switchover target is fulfilled, the service consumer determines whether to perform another operation. If the first operation report indicates that the switchover target is fulfilled, and the switchover verification report includes the recommended information, the service consumer determines whether to perform a recommended operation based on the recommended information, for example, resending the operation information and modifying Operation target to a recommended value, that is, performing the second operation.

In another possible implementation, if the intent target is not fulfilled, a new intent request is sent to update included intent content, for example, update information about Operation target.

According to the solutions of this application, a vendor domain management system constructs a digital twin, and provides a digital twin service for an operator OSS domain, so that the digital twin is constructed more accurately. In addition, an operator OSS obtains experience of the digital twin service by using the service provided by a vendor domain, thereby achieving an envisioned goal of an operator in constructing the digital twin.

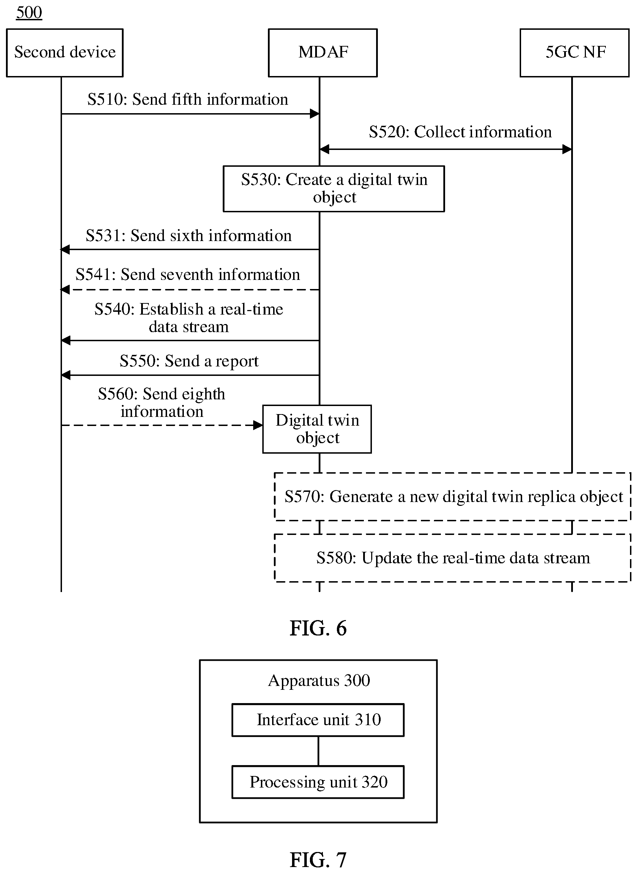

As shown in FIG. 6, this application provides a management method 500 based on a digital twin service.

In the following embodiment, a first device may be a management data analytics MDA function entity. A digital twin visualization and verification solution may be implemented based on the MDA function entity by using the method 500.

According to a definition of a management data analytics service (management data analytics service, MDAS) in the 3GPP TS 28.104 protocol, a management data analytic function (management data analytic function, MDAF) that provides the MDAS service can process and analyze data related to networks and services, for example, analyze data such as network performance measure (performance measure, PM), key performance indicator (key performance indicators, KPI), technology quality of service (quality of service, QoS) indicator report, alarm, configuration data, network analytics data, and service experience, to provide useful analytics outputs. For example, the MDAF can predict faults; analyze network energy consumption and provide a recommended energy saving solution; and analyze network delay problems, provide root causes of excessively long delays in the network, and provide recommended solutions for resolving the long delays. The MDAF can also identify issues that affect network and service performance and help identify, in advance, potential issues that may cause potential faults and/or performance degradation.

The MDAF has a capability of obtaining network information and analyzing networks based on the obtained information. The MDAF can provide the functions of the digital twin service provider, the digital twin management service, and the emulation service described above.

The method 500 may include the following steps.

S510: A second device sends fifth information, and correspondingly, the MDAF receives the fifth information.

The second device is an operator device and belongs to a service consumer. An MDARequest creation request, namely, the fifth information, is sent to the first device MDAF. The fifth information indicates to create a digital twin object.

The fifth information includes at least one of the following information: requirement information, output information, capability information parameter, scope information, and time information. The requirement information indicates the MDAF to output an analytics result and/or a recommended solution, the output information indicates a manner in which the MDAF outputs the analytics result and/or the recommended solution, the capability information parameter indicates a capability of the digital twin object, the scope information indicates a network object to be analyzed, and the time information indicates a time range for analytics.

For example, the fifth information carries an MDARequest object, and the object is defined in specifications in 3GPP TS 28.104. The following Table 3 describes specific information.

**Table 3 MDARequest object information**

| Attribute name (Attribute name) | Description (Description) |
|---|---|
| requestedMDAOutputs | Expected MDAF output information, for example, an analytics result and a recommended solution |
| reportingMethod | MDAF output report sending manner |
| OutPutDTReq | Digital twin requirement information (for example, whether a digital twin is output and whether the digital twin can perform visualization, verification, and playback) |
| reportingTarget | MDAF report sending address |
| analyticsScope | Analytics scope |
| startTime | Analytics start time |
| stopTime | Analytics end time |
| ndtRef | Information about the created digital twin object (only included in response information) |

The OutPutDTReq and ndtRef parameters are used to carry a requirement of the service consumer on the digital twin output, and feed back the information about the digital twin object to the service consumer after the MDAF completes creation of the digital twin object.

S520: The MDAF collects information.

The MDAF is configured to obtain information about a network object, and manage and analyze the information about the network object.

The MDAF collects related network information based on the received MDARequest request.

For example, a specific network object that needs to be analyzed is determined (for example, a network element that needs to be analyzed is determined) based on analytics scope analyticsScope information in the MDARequest object. The collected information may include performance KPI information, alarm information, and configuration information of the analyzed object (for example, a network element). For example, for an AMF network element, the collected information may be information about a quantity of registered users, information about a quantity of requests initiated by the users, information about a quantity of switchover requests initiated by the users, and the like.

S530: The MDAF creates a digital twin instance.

S531: The MDAF sends sixth information, and correspondingly, the second device receives the sixth information.

The MDAF creates at least one digital twin object based on the fifth information and the information about the network object, to be specific, the MDAF creates the digital twin instance based on the network information collected in step S520 and the digital twin requirement information in the MDARequest object. The digital twin object is associated with a physical network instance ID and capability information.

For example, in S510, MDARequest carries the OutPutDTReq parameter, indicating that there is a requirement for outputting the digital twin, and features of visualization and verification are included. Specifically, the MDAF may include a digital twin management function and an emulation function, and create the digital twin object based on the collected network information. For example, the analyzed object (physical network object) includes an AMF network element. For information included in the network element object, refer to a definition of an AMFFunction object in the 3GPP TS 28.541 standard.

The MDAF generates the digital twin object based on the physical network object (for example, by using technologies such as information synchronization and emulation). The object is also an AMFFunction object. To distinguish between the digital twin object and the real physical network object, a digitalTwinData parameter can be added to the AMFFunction object in the standard. In the definition in the standard, AMFFunction and all 5G core network elements are inherited from a ManagedFunction object defined in the TS 28.622 protocol. The digitalTwinData parameter may alternatively be added to the ManagedFunction object, so that any network element can inherit this parameter from the ManagedFunction object. Specifically, a ManagedFunction information object class may include the following attributes: vnfParametersList (this attribute exists only when a ManagedFunction instance is implemented by one or more VNFs; otherwise, this attribute does not exist), peeParametersList (indicating whether control and monitoring on a PEE parameter are supported), priorityLabel (priority label), supportedPerfMetricGroups, supportedTraceMetrics, digitalTwinData, and the like. The following Table 4 lists parameters of digitalTwinData.

**Table 4 Parameters of digitalTwinData**

| Attribute name (Attribute name) | Description (Description) |
|---|---|
| digitalTwinOrNot | Indicates whether the object is a digital twin object |
| DTCapability | Indicates capability information of the digital twin object (for example, verification, visualization (including links), and playback) |
| InstanceRef | Reference to a real physical network element or another digital twin object |

For example, the information about the generated digital twin object (object identifier AMF_DT_1) includes AMFFunction as shown in Table 5.

**Table 5 Parameters of AMFFunction**

| Attribute name (Attribute name) | Description (Description) |
|---|---|
| ManagedFunction object parameter | Inherited ManagedFunction object as described above |
| digitalTwinData | |
| digitalTwinOrNot: true | Indicates that the object is a digital twin object |
| DTCapability: visual, test | Has visualization and verification capabilities |
| InstanceRef: AMF1 | A corresponding physical network object identifier is AMF1 |

The MDAF sends the sixth information to the second device, where the sixth information includes parameters of the at least one digital twin object, and the sixth information indicates an operation that can be performed on the digital twin object. The MDAF sends a successfully created digital twin object to the second device.

S540: The MDAF sends a real-time data stream, and correspondingly, the second device receives the real-time data stream.

Optionally, S541: The MDAF sends seventh information. The seventh information is used to request to establish the real-time data stream, the real-time data stream is used for transmission of a digital twin image generated based on the at least one digital twin object, and the digital twin image includes the information about the network object.

Based on a requirement of visualization included in MDARequest in the fifth message in step S510, the MDAF requests the second device to establish the real-time data stream for transmission of digital twin image information based on emulation.

Specifically, an establishStreamingConnection operation defined in 3GPP TS 28.532 may be used, and descriptions of digital twin information is added to streamInfoList.

For example, the following information may be included.
StreamType: DT (indicating that the data stream is used for transmission of a digital twin image)
objectID: AMF_DT_1 (indicating a digital twin object corresponding to the data stream)
content: PM KPI, alarm (optional, and indicating content included in the transmitted digital twin image, for example, KPI indicator change request and real-time alarm information)

After establishing of the data stream is completed, the MDAF may send image information of the created digital twin object to the second device.

S550: The MDAF sends a report, and correspondingly, the second device receives the report.

The report includes an analytics result and/or a recommended solution. The analytics result is determined based on data information of the network object and the fifth information, the recommended solution includes a third operation, recommended by the MDAF, on the network object, and the third operation includes modifying a parameter of the network object corresponding to the digital twin object.

The MDAF outputs the analytics result, and the result is included in a report MDAReport object. The request includes a recommended solution for resolving a problem and the like (for example, parameter information that is recommended to be modified). For example, MDARequest in S510 may be a request for analyzing feasibility of redundancy switchover. The MDAF analyzes how to perform switchover on the AMF network element to minimize impact on a service, and a switchover solution is included in MDAReport. In a recommended switchover solution, for example, configurations of the AMF need to be updated (for example, reducing capacity, indicating to reduce processing of new user requests).

Optionally, the method 500 may include S560: The second device sends eighth information to the digital twin object, and correspondingly, the digital twin object receives the eighth information.

When the sixth information indicates that the digital twin object has a verification capability, the digital twin object may receive the eighth information sent by the second device, where the eighth information includes identification ID information of the digital twin object. The ID information indicates a target digital twin object to which sending is performed.

The eighth information is determined based on the recommended solution, the eighth information indicates a fourth operation on the digital twin object, and the fourth operation includes modifying the parameter of the digital twin object.

For example, the second device determines, based on the information about the digital twin object received in S531, whether the digital twin object (AMF_DT_1) has a configuration verification (test) capability. When the digitalTwinData parameter included in AMF_DT_1 indicates that the test capability is available, the digital twin object has the configuration verification capability.

The second device sends a configuration modification request for the digital twin object AMF_DT_1 by using a modifyMOI request defined in TS 28.531. The modifyMOI request includes the identifier of the digital twin object, namely, AMF_DT_1, and a configuration parameter that needs to be modified, namely, the capacity parameter.

S570: The MDAF generates a new digital twin replica object for testing, and creates, with reference to S540, a new data stream for transmission of image information of a verification process and result after configuration of the digital twin network replica is modified.

According to the solutions of this application, the MDAF provides a digital twin function, and manages the digital twin object by extending MDARequest.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application. Any sequence arrangement in which functions of each step can be implemented shall fall within the protection scope of this application.

According to the foregoing method, FIG. 7 is a diagram of a management apparatus 300 based on a digital twin service according to an embodiment of this application.

As shown in FIG. 7, the apparatus 300 may include an interface unit 310 and a processing unit 320.

In a possible design, the apparatus 300 may correspond to the first device in the foregoing embodiments of the method 100 and the method 200.

The processing unit 320 in the apparatus 300 is configured to create at least one digital twin instance based on first information and data of a physical entity, where the first information indicates to create a digital twin requested by a second device, the at least one digital twin instance corresponds to the physical entity, and the first device is configured to manage the physical entity.

The interface unit 310 is configured to send second information to the first device, where the second information includes information about the at least one digital twin instance, and the second information indicates an operation that can be performed on the digital twin instance.

In a possible implementation, the processing unit 320 is further configured to: when the first information indicates that a visualization capability is needed, create at least one emulation entity instance based on the first information and the at least one digital twin instance, where the at least one emulation entity instance is for generating a real-time data stream for the corresponding at least one digital twin instance, where the second information further includes access information of the at least one emulation entity instance, and the access information is used by the second device to request the real-time data stream from the at least one emulation entity instance.

In a possible implementation, the at least one digital twin instance includes a first instance and a second instance, the first instance corresponds to a first physical entity, the first physical entity is configured to run a service of a primary network, the second instance corresponds to a second physical entity, and the second physical entity is configured to run a service of a secondary network. The interface unit 310 is further configured to receive third information, where the third information indicates a requirement of a first operation of the second device. The processing unit 320 is further configured to perform the first operation on the at least one digital twin instance based on the third information, where the first operation includes updating information about the first instance and the second instance.

In a possible implementation, the first operation further includes performing an operation on the first physical entity and the second physical entity based on updated information about the first instance and the second instance, for switching from the primary network to the secondary network.

In a possible implementation, the interface unit 310 is further configured to send first response information, where the first response information indicates that the first operation succeeds.

In a possible implementation, the processing unit 320 is further configured to update the real-time data stream generated by the at least one emulation entity instance.

In a possible implementation, the interface unit 310 is further configured to send a first operation report, where the first operation report is determined based on running data of the at least one digital twin instance when the first operation is performed and the third information.

In a possible implementation, the first operation report further includes recommended operation information. The processing unit 320 is further configured to perform a second operation on the at least one digital twin instance based on fourth information, where the fourth information is determined based on the recommended operation information, and the second operation includes updating the information about the first instance and the second instance again.

In a possible implementation, the first information or the third information includes at least one of the following information: target information, scope information, information requirement, capability information, supported operation information, operation information, digital twin instance information, and emulation entity instance information. The target information indicates the physical entity corresponding to the digital twin instance, the scope information indicates a service scope of the digital twin instance, the information requirement indicates data that is of the physical entity and that is needed by the digital twin instance, the capability information indicates a capability of the digital twin instance, the supported operation information indicates a capability of the digital twin instance, and the operation information indicates an operation requirement of the second device.

In a possible implementation, the data of the physical entity includes at least one of the following information: performance management information of the physical entity, fault management information of the physical entity, signaling information, network function NF network element instance information, and network instance information.

In a possible implementation, the interface unit 310 is specifically configured to receive, through a first interface, the first information and the third information that are from the second device.

In a possible implementation, the interface unit 310 is specifically configured to send, through a second interface, the real-time data stream generated by the at least one emulation entity instance.

In a possible implementation, the interface unit 310 is specifically configured to receive, through an intent interface, the first information and the third information that are from the second device, and the first information and the third information are intent information created by the second device.

The interface unit 310 in the management apparatus 300 performs receiving and sending operations performed by the first device in the foregoing method embodiments, and the processing unit 320 performs an operation other than the receiving and sending operations.

For example, the management apparatus 300 may correspond to the second device in the method 100 or the method 200 according to embodiments of this application.

The interface unit 310 in the management apparatus 300 is configured to send first information, where the first information indicates to create a digital twin requested by the second device, the first information is used by a first device to create at least one digital twin instance based on data of a physical entity, the at least one digital twin instance corresponds to the physical entity, and the first device is configured to manage the physical entity. The interface unit 310 is further configured to receive second information from the first device, where the second information includes information about the at least one digital twin instance, and the second information indicates an operation that can be performed on the digital twin instance.

In a possible implementation, when the first information indicates that a visualization capability is needed, the first information further indicates to create at least one emulation entity instance, the at least one emulation entity instance is for generating a real-time data stream for the corresponding at least one digital twin instance, where the second information further includes access information of the at least one emulation entity instance. The processing unit 320 is configured to request the real-time data stream from the at least one emulation entity instance based on the access information.

In a possible implementation, the at least one digital twin instance includes a first instance and a second instance, the first instance corresponds to a first physical entity, the first physical entity is configured to run a service of a primary network, the second instance corresponds to a second physical entity, and the second physical entity is configured to run a service of a secondary network. The interface unit 310 is further configured to send third information, where the third information indicates to perform a first operation on the at least one digital twin instance, the third information indicates a requirement of the first operation of the second device, and the first operation includes updating information about the first instance and the second instance.

In a possible implementation, the first operation further includes performing an operation on the first physical entity and the second physical entity based on updated information about the first instance and the second instance, for switching from the primary network to the secondary network.

In a possible implementation, the interface unit 310 is further configured to receive first response information, where the first response information indicates that the first operation succeeds.

In a possible implementation, the interface unit 310 is further configured to receive an updated real-time data stream generated by the at least one emulation entity instance.

In a possible implementation, the interface unit 310 is further configured to receive a first operation report, where the first operation report is determined based on running data of the at least one digital twin instance when the first operation is performed and the third information.

In a possible implementation, the first operation report further includes recommended operation information. The interface unit 310 is further configured to send fourth information, where the fourth information indicates to perform a second operation on the at least one digital twin instance, the fourth information is determined based on the recommended operation information, and the second operation includes updating the information about the first instance and the second instance again.

In a possible implementation, the first information or the third information includes at least one of the following information: target information, scope information, information requirement, capability information, supported operation information, operation information, digital twin instance information, and emulation entity instance information. The target information indicates the physical entity corresponding to the digital twin instance, the scope information indicates a service scope of the digital twin instance, the information requirement indicates data that is of the physical entity and that is needed by the digital twin instance, the capability information indicates a capability of the digital twin instance, the supported operation information indicates a capability of the digital twin instance, and the operation information indicates an operation requirement of the second device.

In a possible implementation, the data of the physical entity includes at least one of the following information: performance management information of the physical entity, fault management information of the physical entity, signaling information, network function NF network element instance information, and network instance information.

In a possible implementation, the interface unit 310 is specifically configured to send the first information and the third information through a first interface.

In a possible implementation, the interface unit 310 is specifically configured to receive, through a second interface, the real-time data stream generated by the at least one emulation entity instance.

In a possible implementation, the interface unit 310 is specifically configured to send the first information and the third information through an intent interface, and the first information and the third information are intent information created by the second device.

The interface unit 310 in the management apparatus 300 performs receiving and sending operations performed by the second device in the foregoing method embodiments, and the processing unit 320 performs an operation other than the receiving and sending operations.

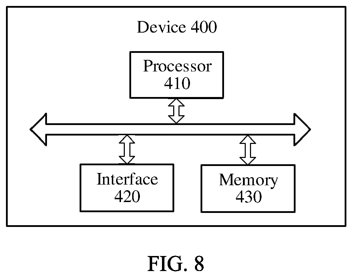

According to the foregoing method, FIG. 8 is a diagram of a management apparatus 400 based on a digital twin service according to an embodiment of this application. As shown in FIG. 8, the apparatus 400 may be a first device, or may be a second device.

The apparatus 400 may include a processor 410 (namely, an example of a processing unit) and a memory 420. The memory 420 is configured to store instructions, and the processor 410 is configured to execute the instructions stored in the memory 420, so that the apparatus 400 implements the steps performed by the first device or the second device in the method 100 or the method 200.

Further, the apparatus 400 may further include an interface 430 (namely, an example of an interface unit module). Further, the processor 410, the memory 420, and the interface 430 may communicate with each other through an internal connection path, to transfer a control signal and/or a data signal. The memory 420 is configured to store a computer program. The processor 410 may be configured to invoke the computer program from the memory 420 and run the computer program, to control the interface 430 to receive a signal or send a signal, to complete the steps performed by the first device or the second device in the foregoing methods. The memory 420 may be integrated into the processor 410, or may be disposed separately from the processor 410.

In a possible implementation, if the apparatus 400 is a communication device, the interface 430 is a receiver or a transmitter. The receiver and the transmitter may be a same physical entity or different physical entities. When the receiver and the transmitter are a same physical entity, the receiver and the transmitter may be collectively referred to as a transceiver.

In a possible implementation, if the apparatus 400 is a chip or a circuit, the interface 430 is an input interface or the interface 430 is an output interface.

In an implementation, it may be considered that a function of the interface 430 is implemented by using a transceiver circuit or a dedicated transceiver chip. It may be considered that the processor 410 is implemented by using a dedicated processing chip, a processing circuit, a processor, or a general-purpose chip.

In another implementation, it may be considered that the apparatus provided in this embodiment of this application may be implemented by using a general-purpose computer. To be specific, program code for implementing functions of the processor 410 and the interface 430 is stored in the memory 420, and a general-purpose processor implements the functions of the processor 410 and the interface 430 by executing the code in the memory 420.

For concepts, explanations, detailed descriptions, and other steps of the apparatus 400 that are related to the technical solutions provided in embodiments of this application, refer to the descriptions of the content in the foregoing methods or other embodiments. Details are not described herein again.

An embodiment of this application further provides a computer-readable storage medium. The computer-readable storage medium stores computer instructions used to implement the method performed by the first device or the second device in the foregoing method embodiments.

For example, when a computer program is executed by a computer, the computer is caused to implement the method performed by the first device or the second device in the foregoing method embodiments.

An embodiment of this application further provides a computer program product including instructions. When the instructions are executed by a computer, the computer implements the method performed by the first device or the method performed by the second device in the foregoing method embodiments.

An embodiment of this application further provides a management system. The management system includes the first device and the second device in the foregoing embodiments.

For explanations and beneficial effects of related content in any one of the apparatuses provided above, refer to the corresponding method embodiment provided above. Details are not described herein again.

It should be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memory, RAM) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware, firmware, or any combination thereof. When software is used to implement embodiments, all or some of the foregoing embodiments may be implemented in a form of a computer program product. The computer program product includes one or more computer instructions or computer programs. When the computer instructions or the computer programs are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by the computer, or a data storage device, like a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally represents an "or" relationship between the associated objects.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. It may be clearly understood by a person skilled in the art that, for the purpose of convenient and brief description, for a detailed working process of the foregoing system, apparatus, and unit, refer to a corresponding process in the foregoing method embodiments. Details are not described herein again. In the several embodiments provided in this application, it should be understood that the disclosed system, apparatus, and method may be implemented in another manner. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments. In addition, functional units in embodiments of this application may be integrated into one processing unit, each of the units may exist alone physically, or two or more units are integrated into one unit. When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A management method based on a digital twin service, comprising:
creating, by a first device, at least one digital twin instance based on first information and data of a physical entity, wherein the first information indicates to create a digital twin requested by a second device, the at least one digital twin instance corresponds to the physical entity, and the first device is configured to manage the physical entity; and
sending second information to the second device, wherein the second information comprises information about the at least one digital twin instance, and the second information indicates an operation that can be performed on the digital twin instance.

2. The method according to claim 1, wherein when the first information indicates that a visualization capability is needed, the method comprises:
creating at least one emulation entity instance based on the first information and the at least one digital twin instance, wherein the at least one emulation entity instance is for generating a real-time data stream for the corresponding at least one digital twin instance, wherein
the second information further comprises access information of the at least one emulation entity instance, and the access information is used by the second device to request the real-time data stream from the at least one emulation entity instance.

3. The method according to claim 1, wherein when the first information indicates that a visualization capability is needed, the method comprises:
sending seventh information to the second device, wherein the seventh information is used to request to establish a real-time data stream, and the seventh information indicates a digital twin instance corresponding to the real-time data stream; and
performing transmission of a digital twin image based on the real-time data stream, wherein the digital twin image comprises information about the digital twin instance corresponding to the real-time data stream.

4. The method according to claim 3, wherein the method comprises:
sending a report, wherein the report comprises an analytics result and/or a recommended solution, wherein
the analytics result is determined based on the physical entity and the first information, the recommended solution comprises a third operation, recommended by the first device, on the physical entity, and the third operation comprises modifying a parameter of the physical entity corresponding to the at least one digital twin instance.

5. The method according to claim 1 or 2, wherein the at least one digital twin instance comprises a first instance and a second instance, the first instance corresponds to a first physical entity, the first physical entity is configured to run a service of a primary network, the second instance corresponds to a second physical entity, the second physical entity is configured to run a service of a secondary network, and the method further comprises:
receiving third information from the second device, wherein the third information indicates a requirement of a first operation of the second device; and
performing the first operation on the at least one digital twin instance based on the third information, wherein the first operation comprises updating information about the first instance and the second instance.

6. The method according to claim 5, wherein the first operation further comprises performing an operation on the first physical entity and the second physical entity based on updated information about the first instance and the second instance, for switching from the primary network to the secondary network.

7. The method according to claim 5 or 6, wherein the method further comprises:
sending first response information, wherein the first response information indicates that the first operation succeeds.

8. The method according to any one of claims 5 to 7, wherein the method further comprises:
updating the real-time data stream generated by the at least one emulation entity instance.

9. The method according to any one of claims 5 to 8, wherein the method further comprises:
sending a first operation report, wherein the first operation report is determined based on running data of the at least one digital twin instance when the first operation is performed and the third information.

10. The method according to any one of claims 5 to 9, wherein the first operation report further comprises recommended operation information, and the method further comprises:
performing a second operation on the at least one digital twin instance based on fourth information, wherein the fourth information is determined based on the recommended operation information, and the second operation comprises updating the information about the first instance and the second instance again.

11. The method according to any one of claims 5 to 10, wherein the first information or the third information comprises at least one of the following information: target information, scope information, information requirement, capability information, supported operation information, operation information, digital twin instance information, and emulation entity instance information, wherein
the target information indicates the physical entity corresponding to the digital twin instance, the scope information indicates a service scope of the digital twin instance, the information requirement indicates data that is of the physical entity and that is needed by the digital twin instance, the capability information indicates a capability of the digital twin instance, the supported operation information indicates a capability of the digital twin instance, and the operation information indicates an operation requirement of the second device.

12. The method according to any one of claims 1 to 11, wherein the data of the physical entity comprises at least one of the following information: performance management information of the physical entity, fault management information of the physical entity, signaling information, network function NF network element instance information, and network instance information.

13. The method according to any one of claims 5 to 12, wherein the first device receives, through a first interface, the first information and the third information that are from the second device.

14. The method according to claim 2, wherein the first device sends, through a second interface, the real-time data stream generated by the at least one emulation entity instance.

15. The method according to any one of claims 5 to 12, wherein the first device receives, through an intent interface, the first information and the third information that are from the second device, and the first information and the third information are intent information created by the second device.

16. A management method based on a digital twin service, comprising:
sending, by a second device, first information, wherein the first information indicates to create a digital twin requested by the second device, the first information is used by a first device to create at least one digital twin instance based on data of a physical entity, the at least one digital twin instance corresponds to the physical entity, and the first device is configured to manage the physical entity; and
receiving second information from the first device, wherein the second information comprises information about the at least one digital twin instance, and the second information indicates an operation that can be performed on the digital twin instance.

17. The method according to claim 16, wherein when the first information indicates that a visualization capability is needed, the first information further indicates to create at least one emulation entity instance, the at least one emulation entity instance is for generating a real-time data stream for the corresponding at least one digital twin instance, wherein
the second information further comprises access information of the at least one emulation entity instance, and
the real-time data stream is requested from the at least one emulation entity instance based on the access information.

18. The method according to claim 16, wherein when the first information indicates that a visualization capability is needed, the method comprises:
receiving seventh information, wherein the seventh information is used to request to establish a real-time data stream, and the seventh information indicates a digital twin instance corresponding to the real-time data stream; and
receiving a digital twin image based on the real-time data stream, wherein the digital twin image comprises information about the digital twin instance corresponding to the real-time data stream.

19. The method according to claim 18, wherein the second information indicates that the digital twin instance has a verification capability, and the method further comprises:
receiving a report sent by the first device, wherein the report comprises an analytics result and/or a recommended solution, wherein the analytics result is determined based on the physical entity and the first information, the recommended solution comprises a third operation, recommended by the first device, on the physical entity, and the third operation comprises modifying a parameter of the physical entity corresponding to the at least one digital twin instance; and
sending eighth information, wherein the eighth information comprises identification ID information of the digital twin instance, the eighth information is determined based on the recommended solution, the eighth information indicates a fourth operation on the digital twin instance, and the fourth operation comprises modifying a parameter of the digital twin instance.

20. The method according to claim 16 or 17, wherein the at least one digital twin instance comprises a first instance and a second instance, the first instance corresponds to a first physical entity, the first physical entity is configured to run a service of a primary network, the second instance corresponds to a second physical entity, the second physical entity is configured to run a service of a secondary network, and the method further comprises:
sending third information, wherein the third information indicates to perform a first operation on the at least one digital twin instance, the third information indicates a requirement of the first operation of the second device, and the first operation comprises updating information about the first instance and the second instance.

21. The method according to claim 20, wherein the first operation further comprises performing an operation on the first physical entity and the second physical entity based on updated information about the first instance and the second instance, for switching from the primary network to the secondary network.

22. The method according to claim 20 or 21, wherein the method further comprises:
receiving first response information, wherein the first response information indicates that the first operation succeeds.

23. The method according to claim 17, wherein the method further comprises:
receiving an updated real-time data stream generated by the at least one emulation entity instance.

24. The method according to any one of claims 20 to 23, wherein the method further comprises:
receiving a first operation report, wherein the first operation report is determined based on running data of the at least one digital twin instance when the first operation is performed and the third information.

25. The method according to any one of claims 20 to 24, wherein the first operation report further comprises recommended operation information, and the method further comprises:
sending fourth information, wherein the fourth information indicates to perform a second operation on the at least one digital twin instance, the fourth information is determined based on the recommended operation information, and the second operation comprises updating the information about the first instance and the second instance again.

26. The method according to any one of claims 20 to 25, wherein the first information or the third information comprises at least one of the following information: target information, scope information, information requirement, capability information, supported operation information, operation information, digital twin instance information, and emulation entity instance information, wherein
the target information indicates the physical entity corresponding to the digital twin instance, the scope information indicates a service scope of the digital twin instance, the information requirement indicates data that is of the physical entity and that is needed by the digital twin instance, the capability information indicates a capability of the digital twin instance, the supported operation information indicates a capability of the digital twin instance, and the operation information indicates an operation requirement of the second device.

27. The method according to any one of claims 16 to 26, wherein the data of the physical entity comprises at least one of the following information: performance management information of the physical entity, fault management information of the physical entity, signaling information, network function NF network element instance information, and network instance information.

28. The method according to any one of claims 20 to 27, wherein the second device sends the first information and the third information through a first interface.

29. The method according to any one of claims 17 to 28, wherein the second device receives, through a second interface, the real-time data stream generated by the at least one emulation entity instance.

30. The method according to any one of claims 20 to 27, wherein the second device sends the first information and the third information through an intent interface, and the first information and the third information are intent information created by the second device.

31. A management apparatus based on a digital twin service, comprising:
a processor, wherein the processor is configured to execute a program or instructions, to cause the apparatus to perform the method according to any one of claims 1 to 15.

32. A management apparatus based on a digital twin service, comprising:
a processor, wherein the processor is configured to execute a program or instructions, to cause the apparatus to perform the method according to any one of claims 16 to 30.

33. A computer-readable storage medium, wherein the computer-readable storage medium stores a computer program, and when the computer program is run on a computer, the computer is caused to perform the method according to any one of claims 1 to 15 or the method according to any one of claims 16 to 30.

34. A computer program product, comprising computer program code, wherein when the computer program code is run, the method according to any one of claims 1 to 15 or the method according to any one of claims 16 to 30 is implemented.
